(19) Europäisches Patentamt / European Patent Office / Office européen des brevets

(11) **EP 3 992 246 B1**

(12) **EUROPEAN PATENT SPECIFICATION**

(45) Date of publication and mention
of the grant of the patent:
**03.09.2025 Bulletin 2025/36**

(21) Application number: **21845530.1**

(22) Date of filing: **13.05.2021**

(51) International Patent Classification (IPC):
**C08L 67/02** (2006.01)      **C08L 25/12** (2006.01)
**C08K 7/14** (2006.01)      **C08K 5/00** (2006.01)

(52) Cooperative Patent Classification (CPC):
(C-Sets available)
**C08L 67/02;** C08K 2201/003; C08K 2201/004
(Cont.)

(86) International application number:
**PCT/KR2021/006032**

(87) International publication number:
**WO 2022/019453 (27.01.2022 Gazette 2022/04)**

(54) **RESIN COMPOSITION FOR LASER TRANSMISSION**

HARZZUSAMMENSETZUNG FÜR LASERÜBERTRAGUNG

COMPOSITION DE RÉSINE POUR TRANSMISSION LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2020 KR 20200089763**

(43) Date of publication of application:
**04.05.2022 Bulletin 2022/18**

(73) Proprietor: **Kolon Plastics, Inc.
Gyeongsangbuk-do 39537 (KR)**

(72) Inventors:
• **MYEONG, Seong Hyeon
Gimcheon-si Gyeongsangbuk-do 39537 (KR)**
• **CHUNG, Gi Bong
Gimcheon-si Gyeongsangbuk-do 39537 (KR)**

(74) Representative: **Ter Meer Steinmeister & Partner
Patentanwälte mbB
Nymphenburger Straße 4
80335 München (DE)**

(56) References cited:
**CN-A- 109 233 216      JP-A- 2016 137 713
JP-A- 2019 038 878      KR-A- 20050 092 692
KR-A- 20180 023 838      KR-A- 20190 027 115
KR-A- 20200 078 756**

• **HAN ET AL: "Molecular weight and temperature
dependence of intrinsic viscosity of polymer
solutions", POLYMER, ELSEVIER, AMSTERDAM,
NL, vol. 20, no. 9, 1 September 1979 (1979-09-01),
pages 1083 - 1086, XP024122606, ISSN:
0032-3861, [retrieved on 19790901], DOI: 10.1016/
0032-3861(79)90298-2**

**(Cont. next page)**

(52) Cooperative Patent Classification (CPC): (Cont.)

C-Sets
**C08L 67/02, C08K 5/0041, C08K 7/14, C08L 25/12,
C08L 67/02**

## Description

### [Technical Field]

The present invention relates to a resin composition for laser transmission, and more particularly, to a resin composition applicable to parts using a laser welding method and having improved laser transmission characteristics and dimensional stability.

### [Background Art]

A laser welding (fusion) method may realize higher water-tightness, bonding strength after bonding than conventional methods such as ultrasonic welding, vibration welding, thermal welding, and also reduce generation of burrs and dust and thus improve quality, thereby drawing attention in various parts-manufacturing fields. The basic components for laser welding may be a laser, a laser transmission material, and a laser absorption material. The laser may use a near-infrared ray (NIR) laser beam, and mainly, a semiconductor laser having a wavelength band of 800 nm to 1100 nm. The laser transmission material is a material that transmits the laser and has appropriate laser transmittance according to a required thickness of a product. The laser absorption material is a material that absorbs the laser and has laser transmittance of close to 0 %, and includes carbon black with high absorption and an additive that absorbs the laser. Since products manufactured by the laser welding method mainly have a black color when used as automobile parts, the laser transmission material and the laser absorption material are similarly implemented with the black color. The laser absorption material includes the carbon black and thus has a black color, but when the laser transmission material includes the carbon black, although the black color may be realized, the laser transmittance may be deteriorated due to absorption of the laser wavelength band, so it is impossible to perform the laser welling. Research on a laser transmission material including a dye and a pigment in order to implement a similar black color to that of the laser absorption material is being conducted, but still may not satisfy the laser transmission characteristics and the dimensional stability as well as realize the black color. As the laser transmission material and the laser absorption material are each injected and then welded, there is a problem of dimensional changes according to molding shrinkage of a target resin and warpage according to fiber orientation when glass fiber is included therein. When the target resin is a crystalline resin, there is another problem of deteriorating laser welding adhesion due to a transmittance deviation according to injection-processing conditions and crystallization behavior changes as well as the dimensional changes according to the molding shrinkage. Even when the target resin is a semi-crystalline polymer such as polyamide, polybutylene terephthalate (hereinafter referred to as PBT), polyoxymethylene, since crystalline regions are present, there is a problem of low transmittance due to refraction and reflection of the laser during the transmission. Research on a method of reducing crystallization of PBT in order to minimize the transmittance deterioration and the transmittance deviation according to the processing conditions and improve the dimensional stability due to molding shrinkage and warpage as well as securing excellent laser transmission characteristics is being made. When polyethylene terephthalate (hereinafter referred to as PET) resin with high compatibility is included in PBT, as the PET has a lower crystallization temperature than PBT, it may improve surface characteristics, but since both PBT and PET correspond to the semi-crystalline polymers, the transmittance is not significantly improved, and the dimensional stability is also not improved. Korea Patent Laid-Open Publication No. 2018-0090307 discloses a method of increasing the laser transmittance of the PBT resin by alloying it with a amorphous resin such as a polycarbonate (hereinafter referred to as PC), but still needs improvement of characteristics such as transmittance, bonding strength.

CN 109 233 216 A refers to a black glass fiber reinforced PBT (Polybutylene Terephthalate) composite material capable of performing laser welding and a preparation method of the composite material.

JP 2016 137713 A is directed to a member for laser deposition formed by injection molding of a thermoplastic polyester-based resin material.

### [Disclosure]

### [Description of the Drawings]

### [Technical Problem]

An object of the present invention is to provide a resin composition for laser transmission capable of realizing high transmittance, imparting improved dimensional stability and low warpage characteristics, and implementing a black color.

### [Technical Solution]

As a result of the present inventors' efforts to solve the above problems, it is confirmed that when using a PBT resin, a PET resin, a styrene-acrylonitrile resin, a glass fiber, and a laser-transmitting dye together, high transmittance may be implemented compared to the existing laser-transmitting material while providing dimensional stability and low warpage characteristics, and realizing a black color, and the present invention has been completed.

The present invention provides a resin composition for laser transmission including: 30 wt% to 50 wt% of a polybutylene terephthalate resin; 10 wt% to 25 wt% of a polyethylene terephthalate resin; 10 wt% to 20 wt% of a styrene-acrylonitrile resin; 20 wt% to 35 wt% of a glass fiber; and 0.01 wt% to 1 wt% of a laser-transmitting dye.

The laser-transmitting dye may include Solvent Brown 53 ((E)-2,3-bis[(2-hydroxyphenyl)methylideneamino]but-2-enedinitrile;nickel; CAS No. 64696-98-6) and Solvent Blue 97 (1,4-bis(2,6-diethyl-4-methylanilino)anthracene-9,10-dione; CAS No. 61969-44-6).

Another embodiment of the present invention provides a molded article manufactured from the resin composition for laser transmission.

## [Advantageous Effects]

The resin composition for laser transmission according to the present invention realizes high transmittance, improved dimensional stability, and low warpage characteristics due to a reduction in molding shrinkage, and is suitable for laser welding by exhibiting a black color.

## [Mode for Invention]

An embodiment of the present invention provides a resin composition for laser transmission including: 30 wt% to 50 wt% of a polybutylene terephthalate resin; 10 wt% to 25 wt% of a polyethylene terephthalate resin; 10 wt% to 20 wt% of a styrene-acrylonitrile resin; 20 wt% to 35 wt% of a glass fiber; and 0.01 wt% to 1 wt% of a laser-transmitting dye.

Hereinafter, the present invention is described in more detail.

[Polybutylene Terephthalate]

The resin composition for laser transmission of the present invention includes polybutylene terephthalate (hereinafter referred to as PBT) as a base resin. The PBT may be prepared by polycondensation through direct esterification or transesterification using 1,4-butanediol and terephthalic acid or dimethyl terephthalate as monomers. After dissolving PBT in an o-chlorophenol (OCP) solvent, when measured with a viscometer (Cannon viscometer), an inherent viscosity of PBT may be 0.8 dl/g to 1.1 dl/g.

When the inherent viscosity of PBT is less than 0.8 dl/g, elongation and impact strength may be deteriorated, but when the inherent viscosity of PBT is greater than 1.1 dl/g, a flow index may be lowered, thereby deteriorating molding and processability.

The PBT resin may be included in an amount of 30 wt% to 50 wt% based on the total weight of the resin composition for laser transmission, but when the PBT resin is included in an amount of less than 30 wt%, mechanical properties may be deteriorated, or a decrease in a crystallization temperature may deteriorate processability and significantly lower a heat deflection temperature, but when the PBT resin is included in an amount of greater than 50 wt%, laser transmission characteristics may be deteriorated.

[Polyethylene Terephthalate]

The resin composition for laser transmission of the present invention includes polyethylene terephthalate (hereinafter referred to as PET) as a base resin. The PET may be prepared by polycondensation through direct esterification or transesterification using ethylene glycol and terephthalic acid or dimethyl terephthalate as monomers. After dissolving the PET resin in an o-chlorophenol (OCP) solvent, when the PET resin is measured with respect to inherent viscosity with a viscometer (a Cannon viscometer), the inherent viscosity of PET may be in a range of 0.6 dl/g to 0.9 dl/g.

When the inherent viscosity of PET is less than 0.6 dl/g, mechanical properties may be difficult to secure, but when the inherent viscosity of PET is greater than 0.9 dl/g, a flow index may be lowered, deteriorating molding and processability.

When the PET resin is included in an amount of 10 wt% to 25 wt% based on the total weight of the resin composition for laser transmission, and when the PET resin is included in an amount of less than 10 wt%, laser transmittance characteristics and surface characteristics during the injection processing may be deteriorated, but when the PET resin is included in an amount of greater than 25 wt%, heat deflection temperature characteristics and molding workability due to a slow solidification rate may be deteriorated.

[Styrene-acrylonitrile Resin]

The resin composition for laser transmission of the present invention includes styrene-acrylonitrile (hereinafter, SAN) as a base resin.

The SAN resin may have a weight average molecular weight (Mw) ranging from g/mol 150,000 to 180,000 g/mol, but when the molecular weight of the SAN resin is less than 150,000 g/mol, mechanical properties may be difficult to secure, and when the molecular weight is greater than 180,000 g/mol, a flow index may be lowered, deteriorating molding and processability.

The SAN resin may include 25 wt% to 35 wt% of acrylonitrile based on a total weight of the SAN resin.

The SAN resin may be included in an amount of 10 wt% to 20 wt% based on the total weight of the resin composition for laser transmission, but when the SAN resin is included in an amount of less than 10 wt%, laser transmittance characteristics and low warpage characteristics may be deteriorated, and when the SAN resin is included in an amount of greater than 20 wt%, a heat deflection temperature may be lowered, and molding workability may be deteriorated due to a slow solidification rate.

[Glass Fiber]

The resin composition for laser transmission of the present invention includes a glass fiber as a reinforcing material.

The glass fiber may be in the form of chopped strands having a nominal diameter of 10 to 13 $\mu$m and a length of 3 to 5 mm.

The surface of the glass fiber may be treated with a coupling treatment agent. The coupling treatment agent may be a silane coupling treatment agent having an organic functional group such as a vinyl group, an epoxy group, a mercaptan group, or an amine group.

The glass fiber may be included in an amount of 20 to 35 wt% based on the total weight of the resin composition for laser transmission. When the glass fiber is included in an amount of less than 20 wt%, mechanical properties may be deteriorated, while dimensional stability is deteriorated, but when the glass fiber is included in an amount of greater than 35 wt%, the mechanical properties may be improved, but surface characteristics may be deteriorated, and laser transmittance may also be deteriorated due to refraction of the glass.

The glass fiber may serve to reinforce the mechanical properties, particularly, mechanical strength of the resin composition for laser transmission and a molded article manufactured by using the same.

[Laser-transmitting Dye]

The resin composition for laser transmission of the present invention includes a laser-transmitting dye.

The laser-transmitting dye is a combination of dyes which are able to transmit a laser in a near infrared ray wavelength band and may be colored on a base resin and thus realize a black color, and the black color has an L value (brightness) of 40 or less in the L*a*b of the CIE color system.

The laser-transmitting dye, which is a combination of dyes capable of transmitting the near infrared ray wavelength band and realizing the black color, may exhibit excellent laser transmittance, compared with carbon black and a black dye having a black color and absorbing a near infrared wavelength band.

The laser-transmitting dye may be preferably used by combining two or more dyes capable of transmitting light in the near infrared ray wavelength band rather than using them as a single dye to improve laser transmission characteristics as well as realize a black color, and when Solvent Brown 53 (CAS No. 64696-98-6) and Solvent Blue 97 (CAS No. 61969-44-6) are included, expression of the aforementioned functions is confirmed.

The laser-transmitting dye may be included in an amount of 0.01 wt% to 1 wt% based on the total weight of the resin composition for laser transmission. When the laser-transmitting dye is included in an amount of less than 0.01 wt%, it is difficult to realize a black color, and when included in an amount of greater than 1 wt%, a cost may be increased.

The laser-transmitting dye includes at least two or more dyes capable of transmitting the near infrared ray wavelength band, and when the dyes capable of transmitting the near infrared ray wavelength band are included in each amount of 0.005 wt% to 0.5 wt% in the resin composition for laser transmission, an L value of 40 or less in the CIE color system may be realized, thereby expressing brightness.

[Additive]

The resin composition for laser transmission of the present invention may further include an additive according to required properties.

The additive may be at least one selected from an antioxidant, a light stabilizer, a release agent, a compatibilizer, a nucleating agent, and a hydrolysis resistance agent.

The antioxidant may be at least one selected from phenol-type, phosphite-type, thioether-type, or amine-type antioxidants.

The light stabilizer may be at least one selected from a benzotriazole-based stabilizer, a sebacate HALS-based stabilizer, a triazine-based stabilizer, a benzophenol-based stabilizer, and an amine-based stabilizer.

The releasing agent may be at least one selected from a fluorine-containing polymer, silicone oil, a metal stearic acid salt, a metal montanic acid salt, montanic acid ester wax, and polyethylene wax.

The compatibilizer may be at least one selected from styrene-glycidyl methacrylate, styrene-acrylonitrile-glycidyl methacrylate, ethylene-methacrylate-glycidyl methacrylate, styrene-maleicanhydride, and styrene-acrylonitrile-maleic anhydride.

The nucleating agent may be at least one selected from inorganic components such as wollastonite, talc, mica, silica, and clay.

The hydrolysis resistance agent may be at least one selected from aromatic carbodiimides and aliphatic carbodiimides.

As another embodiment of the present invention provides a molded article manufactured from the aforementioned resin composition for laser transmission.

The molded article of the present invention exhibits (1) tensile strength of greater than or equal to 130 MPa according to ISO 527, (2) a heat deflection temperature of greater than or equal to 150 °C according to ISO 75-2, (3) laser transmittance of greater than or equal to 45 %, which is calculated as a percentage of transmitted power (W1) relative to output power (W0) [ (WO - W1) / WO * 100 (%)] by using a diode laser at a wavelength of 980 nm and a 60x60 mm and 1 mm-thick flat specimen), when processed at a mold temperature of 80 °C, (4) laser transmittance of greater than or equal to 45 % (calculated as a percentage of transmitted power (W1) from output power (W0) [ (WO - W1) / WO * 100 (%)] by using a diode laser at a wavelength of 980 nm and a 60x60 mm and 1 mm-thick flat specimen), when processed at a mold temperature of 120°C, (5) a molding shrinkage of 0.1 % to 0.3 % in a flow direction and 0.2 to 0.4 % in a perpendicular direction according to ISO 294, (6) low warpage characteristics of less than 1 mm on average (obtained by using a 60x60 mm and 1 mm-thick flat specimen, a mold temperature of 80 °C, and measuring a lifted length at each of four edges of a specimen after setting the specimen on a flat place for 24 hours immediately after the injection and averaging the lifted lengths of each edge of 5 specimens), and (7) brightness (L value) of less than 40 (in the LAB of the CIE color system, as L is closer to 0, it appears black, as it closer to 100, it appears white, and if the value is less than 40, it is seemingly similar to black).

The molded article of the present invention has improved dimensional stability and low warpage characteristics according to a decrease in molding shrinkage as well as high transmittance to laser and exhibits a black color and thus may be appropriate for laser welding and useful as a material for automobile parts.

Hereinafter, the present invention is described in more detail through examples. These examples are only for illustrating the present invention in more detail, and it will be apparent to those skilled in the art that the scope of the present invention is not limited by these examples.

Examples 1 to 7 and Comparative Examples 1 to 7

According to compositions shown in Table 1, each component was fusion-kneaded in a twin-screw extruder heated at 255 °C to 275 °C by adjusting a screw rotation speed to 200 rpm to 400 rpm to prepare resin compositions for laser transmission in a chip state, and the resin compositions were dried at 80 °C for 5 hours by using a dehumidifying drier.

(Table 1)

| | PBT resin[1] (wt%) | PET resin[2] (wt%) | SAN resin[3] (wt%) | glass fiber[4] (wt%) | Solvent Brown 53[5] (wt%) | Solvent Blue 97[6] (wt%) | Carbon black[7] (wt%) | Release agent OP wax[8] (wt%) | Antioxidant I1010[9] (wt%) |
|---|---|---|---|---|---|---|---|---|---|
| Ex.1 | 34.34 | 15 | 20 | 30 | 0.03 | 0.03 | - | 0.3 | 0.3 |
| Ex.2 | 49.34 | 10 | 10 | 30 | 0.03 | 0.03 | - | 0.3 | 0.3 |
| Ex.3 | 34.34 | 20 | 15 | 30 | 0.03 | 0.03 | - | 0.3 | 0.3 |
| Ex.4 | 44.34 | 15 | 10 | 30 | 0.03 | 0.03 | - | 0.3 | 0.3 |
| Ex.5 | 49.34 | 20 | 10 | 20 | 0.03 | 0.03 | - | 0.3 | 0.3 |
| Ex.6 | 46.34 | 18 | 15 | 20 | 0.03 | 0.03 | - | 0.3 | 0.3 |
| Ex.7 | 43.34 | 16 | 20 | 20 | 0.03 | 0.03 | - | 0.3 | 0.3 |

(continued)

| | PBT resin[1) (wt%) | PET resin[2) (wt%) | SAN resin[3) (wt%) | glass fiber[4) (wt%) | Solvent Brown 53[5) (wt%) | Solvent Blue 97[6) (wt%) | Carbon black[7) (wt%) | Release agent OP wax[8) (wt%) | Antioxi dant I1010[9) (wt%) |
|---|---|---|---|---|---|---|---|---|---|
| Comp. Ex.1 | 34.20 | 15 | 20 | 30 | - | - | 0.2 | 0.3 | 0.3 |
| Comp. Ex.2 | 49.34 | - | 20 | 30 | 0.03 | 0.03 | - | 0.3 | 0.3 |
| Comp. Ex.3 | 39.34 | 25 | 5 | 30 | 0.03 | 0.03 | - | 0.3 | 0.3 |
| Comp. Ex.4 | 49.34 | 20 | - | 30 | 0.03 | 0.03 | - | 0.3 | 0.3 |
| Comp. Ex.5 | 39.34 | 15 | 25 | 20 | 0.03 | 0.03 | - | 0.3 | 0.3 |
| Comp. Ex.6 | 54.34 | 15 | 20 | 10 | 0.03 | 0.03 | - | 0.3 | 0.3 |
| Comp. Ex.7 | 29.34 | 10 | 20 | 40 | 0.03 | 0.03 | - | 0.3 | 0.3 |
| 1) PBT resin: PBT 1084 manufactured by Bluestar <br> 2) PET resin: KOPET KP130 manufactured by Kolon Plastics, Inc. 3) SAN resin: SAN 320 manufactured by Kumho Petrochemical <br> 4) Glass fiber: 321 made by KCC <br> 5) Solvent Brown 53: Polysynthren Brown R from Clariant <br> 6) Solvent Blue 97: Macrolex Blue RR from Bayer <br> 7) Carbon black: Hiblack 50L made by Orion <br> 8) Release agent: Licowax OP manufactured by Clariant <br> 9) Antioxidant: Irganox 1010 from BASF | | | | | | | | | |

Each specimen of the resin compositions for laser transmission according to the examples and the comparative examples was measured with respect to tensile strength, a heat deflection temperature, laser transmittance depending on a mold temperature, molding shrinkage, and low warpage characteristics, and brightness in the following methods, and the results are shown in Table 2.

(1) Tensile Strength

- According to ISO 527, dumbbell-type specimen (a thickness of 4 mm) was produced
- After being left at room temperature (23 °C) for 24 hours, the tensile strength was measured at a 5 mm/min speed

(2) Heat Deflection Temperature

- According to ISO 75-2, specimens (a length of 80 mm, a width of 10 mm, a thickness of 4 mm) were produced
- After being left at room temperature (23 °C) for 24 hours, the heat deflection temperature was measured under a load of 1.8 MPa

(3) Laser transmittance

- Laser transmittance was measured with a laser transmittance meter manufactured by Laserline Co., Ltd.
- Laser: LDM500-40, diode laser
- Laser wavelength: 980 nm, setting output power: 5.5 to 6.0 W
- Measurement specimen: 60x60 mm in size, 1 mm in thickness, square flat specimen
- An average value was calculated after measuring each edge and midpoint of the measurement specimen
- Transmittance was measured after processing at a mold temperature of 80 °C and 120 °C respectively
- Transmittance was calculated as a percentage of measured power (W1) transmitted to output power (W0)

$$[(W0 - W1) / W0 * 100 (\%)]$$

(4) Molding Shrinkage

- According to ISO 294
- Measurement specimen: 60x60 mm size, 2 mm thick square specimen
- It was measured by setting the injection gate direction according to the glass fiber orientation as the flow direction and an average value was obtained of 5 times with the perpendicular plane as the perpendicular direction (X-flow direction)
- The reduced size (T1) compared to the existing mold size (60x60 mm) was substituted for the existing size (T0) and their ratio was calculated using the following equation: [(T0 - T1) / T0 * 100 (%)]

(5) Low warpage Characteristics

- 60x60 mm, 1 mm thick flat specimen, mold temperature of 80 °C
- Immediately after injection of the specimen, it was left on a flat place for 24 hours and the lifted length of each of the four corners was measured
- The average value of the lifted length of each edge of 5 specimens was measured, as less than 1 mm on average

(6) Brightness (L value)

- 60x60 mm, 1 mm-thick flat specimen, mold temperature of 80 °C
- Average L value of 5 specimens was measured with a colorimeter (800 model manufactured by DATACOLOR), at less than 40 on average

(Table 2)

|  | Tensile strength (MPa) | Thermal distortion temperature (°C) | Laser Transmittance (%) at 80 °C | Laser Transmittance (%) at 120 °C | Molding shrinkage flow - right angle) | Low warpage characteristics (mm) | CIE color system L value |
|---|---|---|---|---|---|---|---|
| Ex.1 | 150 | 165.1 | 54.8 | 35.6 | 0.13-0.24 | 0.03 | 37.9 |
| Ex.2 | 148 | 173.5 | 51.3 | 31.1 | 0.15-0.29 | 0.06 | 37.9 |
| Ex.3 | 152 | 173.3 | 53.5 | 30.8 | 0.15-0.25 | 0.04 | 37.8 |
| Ex.4 | 147 | 174.6 | 52.1 | 32.5 | 0.15-0.30 | 0.06 | 37.9 |
| Ex.5 | 138 | 159.4 | 60.3 | 35.5 | 0.16-0.35 | 0.08 | 38.6 |
| Ex.6 | 138 | 157.8 | 48.7 | 30.0 | 0.19-0.36 | 0.07 | 38.5 |
| Ex.7 | 134 | 151.7 | 50.9 | 27.7 | 0.19-0.34 | 0.07 | 38.3 |
| Comp. Ex.1 | 141 | 168.0 | 0.0 | 0.0 | 0.15-0.32 | 0.05 | 35.2 |
| Comp. Ex.2 | 137 | 175.3 | 41.2 | 23.3 | 0.16-0.35 | 0.04 | 37.7 |
| Comp. Ex.3 | 151 | 195.5 | 33.5 | 20.3 | 0.35-0.91 | 1.55 | 37.9 |
| Comp. Ex.4 | 154 | 205.5 | 21.0 | 9.5 | 0.36-1.10 | 2.24 | 38.0 |
| Comp. Ex.5 | 132 | 126.9 | 50.9 | 37.8 | 0.19-0.32 | 0.02 | 38.1 |
| Comp. Ex.6 | 118 | 143.5 | 59.8 | 39.8 | 0.28-0.45 | 0.16 | 38.7 |
| Comp. Ex.7 | 158 | 160.3 | 44.4 | 25.0 | 0.13-0.25 | 0.03 | 37.2 |

Referring to Tables 1 and 2, the resin compositions for laser transmission according to the present invention included 30 wt% to 50 wt% of a PBT resin, 10 wt% to 25 wt% of a PET resin, 10 wt% to 20 wt% of a SAN resin, 20 wt% to 35 wt% of glass fiber, and 0.01 wt% to 1 wt% of a laser-transmitting dye and thus realized a black color as well as excellent tensile strength, heat deflection temperature, laser transmittance, molding shrinkage, and low warpage characteristics.

When the laser-transmitting dye was not included (Comparative Example 1), the laser transmittance was low, or the black color was not realized, and when the PET content was out of the range (Comparative Example 2), the laser transmittance was insufficient. When the SAN resin was included out of the content range (Comparative Examples 3, 4, and 5), the laser transmittance, molding shrinkage, and low warpage characteristics were deteriorated, or the tensile strength and the heat deflection temperature were lowered. When the glass fiber was included out of the content range (Comparative Examples 6 and 7), the tensile strength, heat deflection temperature, molding shrinkage, and low warpage characteristics were insufficient, or the laser transmittance was deteriorated.

As the specific parts of the present invention have been described in detail above, it will be apparent to those of ordinary skill in the art that these specific descriptions are only preferred embodiments, and the scope of the present invention is not limited thereto. Accordingly, it is intended that the substantial scope of the present invention be defined by the appended claims and their equivalents.

**[Industrial Applicability]**

The present invention relates to a resin composition for laser transmission, and is applicable to parts using a laser welding method.

**Claims**

1. A resin composition for laser transmission, comprising:

   30 wt% to 50 wt% of a polybutylene terephthalate resin;
   10 wt% to 25 wt% of a polyethylene terephthalate resin;
   10 wt% to 20 wt% of a styrene-acrylonitrile resin;
   20 wt% to 35 wt% of a glass fiber; and
   0.01 wt% to 1 wt% of a laser-transmitting dye.

2. The resin composition for laser transmission of claim 1, wherein the laser-transmitting dye comprises (E)-2,3-bis[(2-hydroxyphenyl)methylideneamino]but-2-enedinitrile;nickel (CAS No. 64696-98-6), and 971,4-bis(2,6-diethyl-4-methylanilino)anthracene-9,10-dione (CAS No. 61969-44-6).

3. A molded article manufactured from the resin composition for laser transmission of any one of claims 1 or 2.

**Patentansprüche**

1. Harzzusammensetzung für die Laserübertragung, umfassend:

   30 Gew.-% bis 50 Gew.-% eines Polybutylenterephthalatharzes;
   10 Gew.-% bis 25 Gew.-% eines Polyethylenterephthalatharzes;
   10 Gew.-% bis 20 Gew.-% eines Styrol-Acrylnitril-Harzes;
   20 Gew.-% bis 35 Gew.-% einer Glasfaser; und
   0,01 Gew.-% bis 1 Gew.-% eines laserdurchlässigen Farbstoffs.

2. Harzzusammensetzung zur Laserübertragung nach Anspruch 1, wobei der laserdurchlässige Farbstoff (E)-2,3-Bis[(2-hydroxyphenyl)methylidenamino]but-2-endinitril; Nickel (CAS-Nr. 64696-98-6) und 971,4-Bis(2,6-diethyl-4-methylanilino)anthracen-9,10-dion (CAS-Nr. 61969-44-6) umfasst.

3. Formteil, hergestellt aus der Harzzusammensetzung für die Laserübertragung nach einem der Ansprüche 1 oder 2.

**Revendications**

1. Composition de résine pour une transmission laser, comportant :

   30 % en poids à 50 % en poids d'une résine de polybutylène téréphtalate ;
   10 % en poids à 25 % en poids d'une résine de polyéthylène téréphtalate ;
   10 % en poids à 20 % en poids d'une résine de styrène-acrylonitrile ;
   20 % en poids à 35 % en poids d'une fibre de verre ; et
   0,01 % en poids à 1 % en poids d'un colorant de transmission laser.

2. Composition de résine pour une transmission laser selon la revendication 1, dans laquelle le colorant de transmission laser comporte (E)-2,3-bis[(2-hydroxyphényl)méthylidèneamino]but-2-ènedinitrile;nickel (N° CAS 64696-98-6) et 971,4-bis(2,6-diéthyl-4-méthylanilino)anthracène-9,10-dione (N° CAS 61969-44-6).

3. Article moulé fabriqué à partir de la composition de résine pour une transmission laser selon l'une quelconque des revendications 1 ou 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180090307

**Non-patent literature cited in the description**

- *CHEMICAL ABSTRACTS,* 64696-98-6

- *CHEMICAL ABSTRACTS,* 61969-44-6